# FASCICULE DE BREVET EUROPEEN

(11) **EP 2 792 087 B1**
(45) Date de publication et mention de la délivrance du brevet: **09.11.2016**
(21) Numéro de dépôt: 12795466.7
(22) Date de dépôt: 06.12.2012
(51) Int. Cl.: H04B 7/185, H04N 7/173, H04N 7/20

(54) **EMISSION/RÉCEPTION DE SIGNAUX HYPERFRÉQUENCES DE DIFFUSION PAR SATELLITE AVEC VOIE DE RETOUR INTERACTIVE UTILISANT UN PROTOCOLE À ÉTALEMENT DE SPECTRE.**
ÜBERTRAGUNG UND EMPFANG VON RUNDFUNKSIGNALEN DURCH EIN SATELLIT DESSEN INTERAKTIVE RÜCKÜBERTRAGUNG EIN SPREIZSPEKTUM PROTOKOL VERWENDET.
TRANSMISSION RECEPTION OF RADIO BROADCASTING SIGNALS BY A SATELLITE WITH INTERACTIV FEEBACK LINK USING A SPREAD SPECTRUM PROTOCOL.

(30) Priorité: 15.12.2011 FR 1161678
(43) Date de publication de la demande: 22.10.2014
(60) Demande divisionnaire: 15161683.6
(73) Titulaire: Eutelsat S.A., 75015 Paris (FR)
(72) Inventeur: ARCIDIACONO, Antonio, F-75016 PARIS (FR); FINOCCHIARO, Daniele Vito, F-75015 PARIS (FR)
(74) Mandataire: Lebkiri, Alexandre
(86) Numéro de dépôt international: PCT/EP2012/074636
(87) Numéro de publication internationale: WO 2013/087502

(56) Documents cités:
- WO-A1-2011/076791
- WO-A2-03/103300

## Description

La présente invention concerne une installation d'émission/réception de signaux radioélectriques hyperfréquences.

Actuellement, la diffusion de programmes de télévision numérique par voie terrestre (par exemple selon l'une des normes DVB-T ou DVB-T2) ou par voie satellite (par exemple selon l'une des normes DVB-S, DVB-S2 ou DVB-SH) est largement utilisée à travers le monde. De nombreux dispositifs sont installés chez des millions d'utilisateurs.

S'agissant de la voie terrestre, les dispositifs installés sont majoritairement des dispositifs de réception qui comportent une unité extérieure incluant une antenne de réception (par exemple une antenne « râteau » réceptrice) qui transmet des signaux radioélectriques hyperfréquences modulés à une unité intérieure communément appelée décodeur de télévision numérique terrestre ou encore STB (« Set Top Box » en anglais) par l'intermédiaire d'un câble coaxial.

S'agissant de la voie satellitaire, les dispositifs installés sont majoritairement des dispositifs de réception qui comportent une unité extérieure incluant un réflecteur parabolique qui focalise les signaux hyperfréquences modulés, sur la source, appelé cornet, d'un LNB (de l'anglais « Low Noise Block » et qui se traduit par bloc de réception), le LNB transformant les signaux hyperfréquences reçus en signaux électriques en bande satellite intermédiaire afin de les transmettre, par l'intermédiaire d'un câble coaxial au décodeur satellite STB.

Que l'on soit en transmission par voie terrestre ou satellitaire, le décodeur comprend un bloc de démodulation (DVB-T, DVB-T2, DVB-S, DVB-S2 ou DVB-SH) qui extrait un signal modulé « utile » dans le signal modulé transmis sur le câble coaxial et démodule le signal « utile » extrait. Le signal « utile » démodulé peut, par exemple, être utilisé pour l'affichage d'images vidéo sur un écran de télévision.

Les offres de diffusion de programmes de télévision numérique par voie terrestre ou satellitaire sont aujourd'hui essentiellement purement passives, c'est-à-dire unidirectionnelles (« one-way service » en anglais).

Il peut toutefois s'avérer utile de pouvoir offrir des services nécessitant une voie retour ; c'est le cas par exemple des services interactifs (votes, consommation de contenus à accès conditionnel par échange de clefs, commandes de nouveaux services tels que de la vidéo à la demande). En outre, cette voie retour peut trouver des applications particulièrement intéressantes dans le domaine des communications de machine à machine (« Machine to machine » en anglais) ou M2M pour contrôler certains appareils (alarme, chauffage,...) et/ou récupérer des données mesurées par des capteurs ou compteurs (gaz, électricité...) présents au sein des foyers.

Une solution connue à ce problème consiste à utiliser une voie retour utilisant une connexion de type ADSL fournie par des opérateurs de téléphonie fixe (RTC ou « Réseau Téléphonique Commuté ») ou une connexion de type GPRS/UMTS fournie par des opérateurs de téléphonie mobile. Cette solution nécessite donc du matériel supplémentaire ainsi qu'un abonnement additionnel ; par ailleurs, la commutation téléphonique n'est pas particulièrement adaptée à la transmission de messages peu volumineux tels que des messages de vote ou de commande (coût relativement élevé, problèmes de saturation du réseau...).

En voie terrestre, l'utilisation d'une solution plus appropriée, comme la technologie DVB-RCT (décrite dans le standard européen ETSI EN 301 958), a échoué pour des raisons de coût de l'infrastructure nécessaire.

La plupart des offres de télévision par satellite n'intègre pas de voie retour. On peut toutefois citer un exemple de système de diffusion bidirectionnel de télévision par satellite décrit dans le document de brevet EP0888690 ; ce système utilise une voie aller en bande large Ku et une voie retour en bande étroite L. Ce système est encombrant, complexe et coûteux dans la mesure où il nécessite la présence de deux réflecteurs (pour chaque bande Ku et L) ou d'un réflecteur dédié comprenant un réflecteur apte à recevoir des signaux en bande Ku et intégrant une antenne de transmission en bande L. Ce système entraîne également la présence de deux voies physiques d'acheminement de données, l'une de l'antenne en bande Ku vers le décodeur à l'intérieur de la maison et l'autre du décodeur vers l'antenne en bande L. On comprend aisément que ce type d'installation entraîne un changement complet des systèmes standards équipant actuellement les foyers et un surcoût non négligeable.

Un autre exemple de système de diffusion bidirectionnel de télévision par satellite est décrit dans la demande de brevet WO2011076791 déposée par la demanderesse. Ce système utilise une voie aller en bande large Ku ou Ka et une voie retour en bande étroite S ou en bande C, les signaux étant multiplexés sur un même câble coaxial. Le gain du réflecteur pour recevoir les signaux hyperfréquences en bande Ku ou Ka est utilisé pour transmettre les signaux en voie retour dans la bande S ou la bande C. Malgré les gains en amplification obtenus selon cette solution, il n'en demeure pas moins que la perte de puissance du signal utile sur la voie retour (notamment en traversant le câble coaxial) est importante et il est donc nécessaire d'avoir un amplificateur suffisant au niveau de l'unité extérieure. En outre, chaque boîtier utilisé à l'intérieur de la maison doit être équipé d'un modulateur fonctionnant suivant un protocole asynchrone à accès aléatoire multiple à étalement de bande par modulation de type SPREAD ALOHA, ce type de modulateur étant relativement coûteux.

Dans ce contexte, la présente invention vise à fournir une installation de réception de signaux radioélectriques hyperfréquences permettant également d'assurer l'émission en voie retour de signaux radioélectriques hyperfréquences de façon efficace en termes de performances, facilement adaptable à une installation préexistante desservant un ou plusieurs utilisateurs, évolutive et peu coûteuse.

A cette fin, l'invention propose une installation d'émission/réception de signaux radioélectriques hyperfréquences comportant :
- une unité d'émission/réception comportant :
   o des moyens aptes à recevoir des signaux électriques issus de la transformation de signaux radioélectriques reçus par voie hertzienne terrestre ou par voie satellitaire, dits signaux électriques en voie aller ;
   o un démodulateur apte à démoduler des signaux électriques selon un premier protocole de modulation/démodulation ;
   o un modulateur de signaux électriques selon un second protocole de modulation/démodulation différent dudit premier protocole, ledit second protocole étant un protocole à étalement de spectre, ledit modulateur modulant les signaux démodulés par ledit démodulateur ;
   o des moyens pour transformer lesdits signaux électriques modulés selon ledit protocole à étalement de spectre, dits signaux électriques en voie retour, en signaux radioélectriques aptes à être émis par voie satellitaire ;
- au moins un boîtier incluant un modulateur apte à moduler des signaux électriques selon ledit premier protocole de modulation/démodulation ;
- un câble coaxial reliant l'unité d'émission/réception et le boîtier apte à :
   o véhiculer lesdits signaux électriques en voie aller de ladite unité d'émission/réception vers ledit boîtier ;
   o véhiculer les signaux électriques issus dudit modulateur selon ledit premier protocole dudit boîtier vers ladite unité d'émission/réception.

Grâce à l'invention, on utilise avantageusement une installation employant deux types de modulation/démodulation, par exemple une modulation/démodulation basée sur un protocole adapté à la communication sans fil de courte distance (ZigBee, KNX ou autres) pour la première modulation/démodulation et une modulation/démodulation basée sur un protocole à étalement de spectre telle qu'un protocole asynchrone à accès aléatoire multiple à étalement de bande par modulation du type SPREAD ALOHA utilisant des techniques d'élimination d'interférences (on notera que la démodulation utilisant ces techniques d'élimination d'interférences est mise en oeuvre au niveau du hub satellitaire et ne sera pas décrite plus en détails dans la présente demande). On entend par courte distance une distance inférieure à 300m et préférentiellement inférieure à 100m. Le boîtier est avantageusement un boîtier situé à l'intérieur d'un immeuble (i.e. dans un appartement) et l'unité d'émission réception est avantageusement située à l'extérieur ou proche de l'antenne. Ainsi, l'unité d'émission/réception via son démodulateur va récupérer un signal numérique propre (contenu dans le signal modulé au niveau du boîtier) et moduler ce signal numérique via son modulateur. Le fait de revenir à un signal numérique au niveau de l'unité extérieure d'émission/réception permet d'éliminer le bruit et les erreurs du signal et d'utiliser un amplificateur de faible puissance pour amplifier le signal modulé qui contient très peu de bruit.

L'installation utilise une voie aller de diffusion de signaux vers les utilisateurs qui peut être terrestre (par exemple dans une bande de fréquence comprise entre 470 et 862 MHz) ou satellitaire (par exemple en bande Ku ou Ka) et une voie retour satellitaire (bande de fréquences par exemple comprise entre 1.5 et 5 GHz, c'est-à-dire les fréquences de la bande S, l'utilisation de cette bande de fréquence n'étant pas limitative). On notera que la bande de fréquences de la voie retour satellitaire sera choisie de sorte qu'elle soit suffisamment éloignée de la bande utilisée en voie aller (par exemple émission en bande S et réception en bande Ku) de sorte qu'on n'ait pas besoin d'utiliser un diplexeur (« diplexer » en anglais) pour éviter les interférences d'une voie sur l'autre.

Les avantages d'une telle installation sont multiples.

On utilise une technologie éprouvée en voie aller de diffusion vers les utilisateurs visant à transmettre des signaux de taille importante tels que des signaux de télévision et une voie retour satellitaire permettant notamment à l'utilisateur d'interagir avec la voie de diffusion et de transmettre des messages assez courts, la technique de modulation étant basée sur un protocole à étalement de spectre tel qu'un protocole asynchrone à accès aléatoire multiple à étalement de bande par modulation du type SPREAD ALOHA. Un tel protocole est par exemple décrit dans le document US2010/0054131 (del Rio Herrero et al.).

En outre, les moyens nécessaires à la modulation basée sur un protocole à étalement de spectre sont installés seulement dans l'unité d'émission/réception, le(s) boîtier(s) utilisateur(s) étant équipé(s) d'un modulateur utilisant une technique de modulation nécessitant préférentiellement des moyens de mise en oeuvre présentant un coût et une complexité moindres (modulation/démodulation adaptée à la communication sans fil telle que la technologie ZigBee ou KNX) comparés aux moyens de modulation basée sur un protocole à étalement de spectre. L'avantage d'une telle installation est qu'elle permet d'avoir une unique unité d'émission/réception extérieure et plusieurs boîtiers situés à l'intérieur (par exemple dans différents appartements), lesdits boîtiers ayant un coût de fabrication relativement faible. Le coût de l'unité d'émission/réception peut donc être partagé entre plusieurs utilisateurs. On notera que le fait d'utiliser une modulation/démodulation adaptée à la communication sans fil telle que la technologie ZigBee ou KNX sur un câble coaxial permet d'utiliser cette technologie sans perte sur une bien plus grande longueur de câble que si la communication avait lieu dans l'air.

Le système selon l'invention permet d'être très facilement (et sans surcoût important) adaptable sur une installation existante dans la mesure où il suffit de venir rajouter l'unité d'émission/réception (préférentiellement à l'extérieur de l'habitation) et le boîtier (préférentiellement à l'intérieur de l'habitation) qui viennent se connecter au câble coaxial existant. En outre, l'antenne d'émission des signaux satellitaires est une antenne (i.e. des moyens d'émission vers un satellite des signaux radioélectriques hyperfréquences) très peu coûteuse omnidirectionnelle ou avec une faible directivité (par exemple un gain d'antenne de moins de 10 dBi), et facile à installer. Le signal émis par l'antenne pourra être reçu par un satellite ou un « collecteur » terrestre, selon la fréquence utilisée. On notera qu'on peut s'affranchir de l'utilisation de cette antenne dans le cas d'une voie aller satellitaire en utilisant le réflecteur parabolique pour la transmission de la voie retour.

Le faible coût de l'unité d'émission/réception vient aussi du fait que en utilisant deux bandes différentes pour l'émission et la réception (par exemple émission en bande S et réception en bande Ku) il n'est pas nécessaire d'utiliser un diplexeur pour éviter les interférences d'une voie sur l'autre.

On notera par ailleurs que le système selon l'invention est très évolutif. En effet, il est tout à fait envisageable de commencer à utiliser le système dans une région très vaste (par exemple un pays entier) en émettant tous les signaux retour vers un satellite, sans déploiement d'aucune composante terrestre ; à partir du moment où la capacité du satellite n'est plus suffisante, on identifie la ou les zones de service où il y a le plus de messages envoyés. Dès lors, au lieu d'utiliser directement la liaison antenne - satellite, on peut prévoir des « collecteurs » terrestres, c'est-à-dire des stations de réception terrestres, servant de relais et permettant de réduire la charge du satellite. Les signaux émis par les terminaux, sur une fréquence appropriée, seront alors reçus par les collecteurs au lieu du satellite. La capacité peut ainsi être augmentée en fonction du besoin, avec un coût proportionnel au nombre de terminaux déployés et un investissement progressif.

La voie aller de diffusion terrestre ou satellitaire peut être fortement intégrée à la voie retour satellitaire, puisqu'elle peut contenir, dans un des signaux multiplex émis, des informations de signalisation utiles pour le bon fonctionnement de l'installation. Ces informations peuvent inclure des paramètres d'émission à utiliser (fréquence, débit de type « symbol rate », code d'étalement), la charge du système, des clés de sécurité, ainsi que d'autres instructions pour l'installation. L'unité d'émission/réception contient donc la logique nécessaire pour interpréter l'information présente dans la voie de diffusion terrestre ou satellitaire et l'utiliser pour piloter l'émission de signaux. En outre, l'unité d'émission/réception peut générer, à partir du signal présent dans la voie aller, un signal d'horloge très stable utilisé pour émettre avec une erreur de fréquence très faible - ceci permet de ne pas utiliser un PLL très précis qui aurait un coût élevé.

L'installation selon l'invention est d'autant plus insolite dans le cas d'une voie aller de diffusion terrestre (installation hybride) pour l'homme du métier dans la mesure où il était difficile d'imaginer un système hybride terrestre - satellite avec une voie retour satellitaire sans ajout conséquent de matériels induisant un surcoût rédhibitoire pour l'utilisateur. C'est précisément l'utilisation d'une modulation spécifique pour la communication entre l'unité d'émission/réception et les boîtiers, d'une seconde modulation pour l'émission vers le satellite, d'une antenne peu coûteuse, ainsi que d'un seul câble reliant les boîtiers dans les appartements avec l'unité d'émission/réception à l'extérieur, qui permet de rendre attractive l'installation selon l'invention.

L'installation d'émission/réception selon l'invention peut également présenter une ou plusieurs des caractéristiques ci-dessous, considérées individuellement ou selon toutes les combinaisons techniquement possibles :
- ledit modulateur de signaux électriques selon un second protocole de modulation/démodulation comporte des moyens de mise en oeuvre d'un protocole à étalement de spectre fonctionnant selon un protocole asynchrone à accès aléatoire multiple à étalement de spectre ;
- ledit premier protocole de modulation/démodulation est basé sur un protocole adapté à la communication sans fil de courte distance telle que l'un des protocoles suivants : ZigBee, KNX, WiFi, BlueTooth ou WiMax ;
- ledit premier protocole de modulation/démodulation est basé sur un protocole adapté à une technologie filaire, par exemple Ethernet ou à courant porteur en ligne CPL ;
- ladite unité d'émission/réception comporte des moyens pour extraire, à partir des signaux électriques en voie aller, des informations de signalisation pour l'établissement des paramètres d'émission et/ou un signal d'horloge ;
- ladite unité d'émission/réception comporte un démodulateur desdits signaux électriques en voie aller tel qu'un démodulateur apte à démoduler des signaux selon l'une des normes suivantes :
   o DVB-T ;
   o DVB-T2 ;
   o DVB-S ;
   o DVB-S2 ;
   o DVB-SH ;
- ladite unité d'émission/réception et/ou ledit boîtier comportent des moyens de connexion sans fil tels que des moyens WiFi, WiMax, BlueTooth, ZigBee ou KNX ;
- lesdits signaux électriques en voie retour sont modulés dans la bande de fréquences d'émission dite bande S et plus particulièrement dans la bande [1980 MHz ; 2010 MHz] ;
- lesdits moyens aptes à recevoir des signaux électriques issus de la transformation de signaux radioélectriques sont aptes à recevoir des signaux radioélectriques hyperfréquences terrestres dans la bande UHF ou VHF ;
- lesdits moyens aptes à recevoir des signaux électriques issus de la transformation de signaux radioélectriques sont aptes à recevoir des signaux radioélectriques hyperfréquences satellitaires dans la bande Ku ou la bande Ka ;
- ladite unité d'émission/réception comporte des moyens d'émission vers un satellite et/ou vers une station de réception terrestre desdits signaux radioélectriques aptes à être émis par voie satellitaire ;
- ladite installation comporte une pluralité de boîtiers échangeant des signaux avec une unique unité d'émission/réception.

La présente invention a également pour objet une unité d'émission/réception apte à être intégrée dans une installation selon l'invention, ladite unité comportant :
- des moyens aptes à recevoir des signaux électriques issus de la transformation de signaux radioélectriques reçus par voie hertzienne terrestre ou par voie satellitaire, dits signaux électriques en voie aller ;
- un démodulateur apte à démoduler des signaux électriques selon un premier protocole de modulation/démodulation ;
- un modulateur de signaux électriques selon un second protocole de modulation/démodulation différent dudit premier protocole, ledit second protocole étant un protocole à étalement de spectre, ledit modulateur modulant les signaux démodulés par ledit démodulateur ;
- des moyens pour transformer lesdits signaux électriques modulés selon ledit protocole à étalement de spectre, dits signaux électriques en voie retour, en signaux radioélectriques aptes à être émis par voie satellitaire.

On notera que même si l'unité d'émission/réception est principalement décrite comme un dispositif unique intégrant toutes les fonctionnalités précédemment décrites, il peut également s'agir d'un agencement de plusieurs dispositifs distincts réalisant ces fonctionnalités : on peut ainsi envisager que les moyens d'émission vers le satellite (i.e. l'antenne) ne soient pas directement intégrés au même dispositif.

La présente invention a également pour objet un boîtier apte à être intégré dans une installation selon l'invention comportant un modulateur apte à moduler des signaux électriques selon ledit premier protocole de modulation/démodulation.

D'autres caractéristiques et avantages de l'invention ressortiront clairement de la description qui en est donnée ci-dessous, à titre indicatif et nullement limitatif, en référence à la figure annexée qui représente schématiquement une installation selon un mode de réalisation de l'invention.

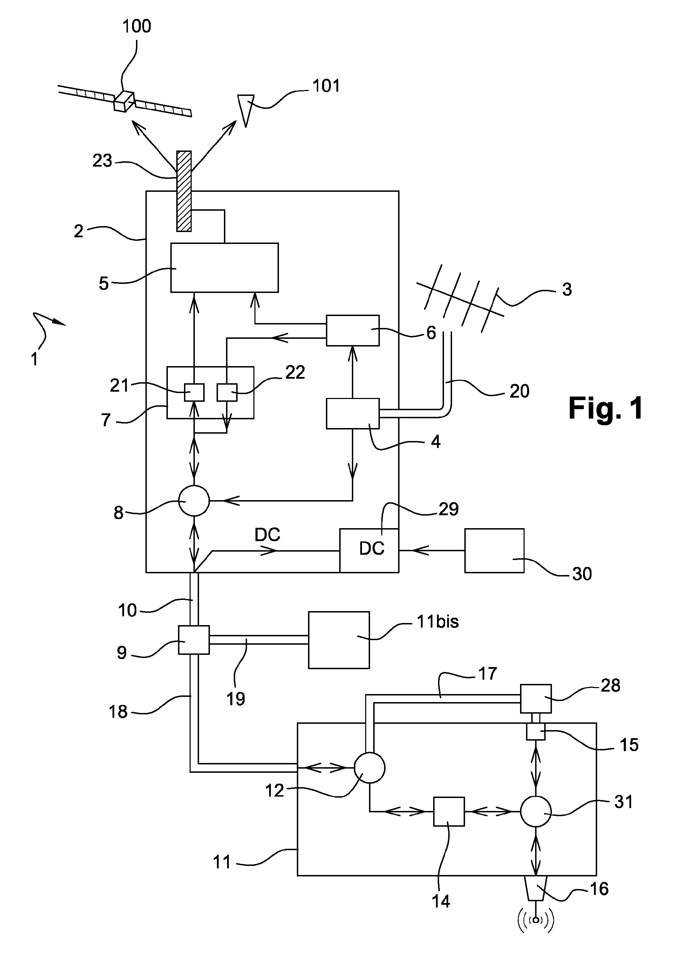

La figure 1 représente schématiquement une installation d'émission/réception 1 selon un premier mode de réalisation de l'invention.

L'installation d'émission/réception 1 est apte à fonctionner avec une antenne hertzienne 3 standard (par exemple une antenne « râteau » se trouvant sur le toit d'un immeuble ou d'une habitation) permettant de recevoir des signaux en bande UHF ou VHF comportant des flux de télévision numérique terrestre codés selon un protocole de type DVB-T ou DVB-T2.

L'installation d'émission/réception 1 comporte :
- une unité d'émission/réception 2 extérieure à la maison ;
- un câble coaxial 10 ;
- un coupleur/découpleur hyperfréquence 9 de signaux radioélectriques ;
- une pluralité de boîtiers (ici deux boîtiers 11 et 11 bis sont représentés) destinés à être logés à l'intérieur de l'immeuble (chaque boîtier est par exemple à l'intérieur d'un appartement).

L'antenne hertzienne 3 reçoit des signaux modulés selon la norme DVB-T ou DVB-T2, par exemple en bande UHF (bande 470 - 862 MHz).

L'unité d'émission/réception 2 comporte :
- des moyens d'entrée 4 aptes à recevoir les signaux électriques terrestres reçues par l'antenne 3 (l'antenne et les moyens d'entrée 4 sont par exemple reliés par un câble coaxial 20) ;
- un coupleur/découpleur hyperfréquence 8 de signaux radioélectriques ;
- un modem 7 fonctionnant selon une première modulation/démodulation ;
- un modulateur 5 fonctionnant selon une deuxième modulation/démodulation ;
- une antenne 23 omnidirectionnelle ou quasi omnidirectionnelle (i.e. une antenne avec une faible directivité, par exemple présentant un gain d'antenne de moins de 10 dBi) apte à transformer des signaux électriques en bande S d'émission (par exemple dans la bande [1980 MHz - 2010 MHz]) en signaux radioélectriques hyperfréquences et à transmettre ces signaux vers un satellite 100 ou un collecteur 101 en bande S ;
- un démodulateur 6.

Le modulateur 5 fonctionne par exemple suivant un protocole asynchrone à accès aléatoire multiple à étalement de bande par modulation du type SPREAD ALOHA optimisé pour que le hub satellitaire puisse utiliser des moyens d'élimination d'interférences (un tel protocole est par exemple décrit dans le document US2010/0054131 (del Rio Herrero et al.)) ;

Le modem 7 comporte un modulateur 22 et un démodulateur 21 et est de façon générique un modem fonctionnant suivant un protocole de type FSK (« Frequency Shift Keying » en langue anglaise) ou à modulation par déplacement de fréquence MDF ou dérivée d'un tel protocole ; le modem 7 est préférentiellement un modem fonctionnant selon un protocole adapté aux communications sans fil de courte portée (par exemple inférieure à 300m en fonctionnement sans fil) tel qu'un modem ZigBee ou KNX.

Le démodulateur 6 fonctionne selon la norme DVB-T (décrite dans la norme ETSI EN 300 744 « Digital Video Broadcasting (DVB); Framing structure, channel coding and modulation for digital terrestrial television ») ou DVB-T2 (décrite dans la norme ETSI EN 302 755 « Digital Video Broadcasting (DVB); Frame structure channel coding and modulation for a second generation digital terrestrial television broadcasting system (DVB-T2) », les extensions de la norme DVB-T2 telles que DVB-T2-lite étant décrites dans le « DVB BlueBook A122 »).

Le boîtier 11 comporte :
- un coupleur/découpleur hyperfréquence 12 de signaux radioélectriques ;
- un modem 14 fonctionnant selon le même protocole (première modulation/démodulation) que le modem 7 ; le modem 14 est donc par exemple un modem ZigBee ou KNX ;
- des moyens 16 de connexion sans fil à un réseau local du type WiFi, WiMax, BlueTooth, ZigBee ou KNX, ou de connexion filaire à un réseau local du type Ethernet ou similaire ; ces moyens 16 permettent de recevoir des signaux transmis au modem 14 ;
- une connexion d'entrée/sortie 15 de type USB apte à échanger des signaux avec un décodeur de télévision numérique 28 dit encore STB (« Set Top Box » en anglais) ;
- un coupleur 31 qui interconnecte le modem 14 respectivement avec la connexion d'entrée/sortie 15 et les moyens de connexion sans fil 16.

Le boîtier 11 bis est identique au boîtier 11.

Le câble coaxial 10 relie les boîtiers 11 et 11 bis à l'unité d'émission/réception 2.

Le câble coaxial 10 se sépare en deux via le coupleur/découpleur hyperfréquence 9 de sorte qu'il relie respectivement l'unité d'émission réception 2 et le boîtier 11 via la prolongation 18 du câble 10 et l'unité d'émission réception 2 et le boîtier 11 bis via la prolongation 19 du câble 10. On notera que le coupleur/découpleur hyperfréquence 9 est un dispositif fonctionnant dans les deux directions (i.e. il laisse passer les signaux radioélectriques montant et descendant). Il en va de même des autres coupleurs/découpleurs hyperfréquences de l'installation.

Le fonctionnement de l'installation 1 sera expliqué en référence aux échanges entre l'unité d'émission/réception 2 et le boîtier 11, étant entendu que le fonctionnement est identique entre l'unité d'émission/réception 2 et le boîtier 11 bis.

Le principe de fonctionnement de l'installation 1 selon l'invention repose sur l'utilisation d'une partie réception (sans émission) par voie hertzienne terrestre formée par l'antenne « râteau » 3 et les moyens d'entrée 4 aptes à recevoir les signaux électriques terrestres reçus par l'antenne 3 et d'une partie émission en bande S.

La partie émission en bande S constitue une voie retour permettant la mise en place de services interactifs (votes, consommation de contenus à accès conditionnel par échange de clefs, commandes de nouveaux services tels que de la vidéo à la demande) ou de services M2M (contrôle d'appareils domestiques, surveillance, monitorage d'un paramètre mesuré par un capteur) avec un ajout de matériel relativement limité et peu coûteux sur une installation existante. L'antenne omnidirectionnelle 23 permet de transmettre les signaux en bande S soit directement vers le satellite 100 ou vers des collecteurs terrestres 101 dans l'hypothèse d'une augmentation de la capacité (dans ce cas, l'antenne 10 pourra être légèrement directionnelle de façon à atteindre le collecteur 101).

L'ensemble des signaux est couplé sur le seul câble coaxial 10.

Les signaux terrestres reçus par l'antenne 3 puis les moyens d'entrée 4 sont transmis par le coupleur/découpleur hyperfréquence 8 sur le câble coaxial 10.

Ces signaux sont ensuite récupérés au niveau du coupleur hyperfréquences 12 avant d'être transmis à la STB 28 via un câble coaxial 17.

Les signaux à émettre en bande S sont des signaux numériques qui sont modulés par le modulateur du modem ZigBee 14 (i.e. première modulation/démodulation) du boîtier 11 sur une fréquence intermédiaire (par exemple 868 MHz ou 2,4GHz données à titre purement illustratif). Ces signaux de voie retour peuvent être eux-mêmes issus de signaux provenant d'autres appareils reliés par voie sans fil (via la connexion 16) ou filaire au boîtier 11.

Les signaux ZigBee modulées sont transmis sur le câble coaxial 18 par le coupleur/découpleur 12 puis sur le câble coaxial 10 par le coupleur/découpleur 9 qui transmet les signaux à l'unité d'émission/réception 2.

Le coupleur/découpleur 8 de l'unité d'émission/réception 2 transmet les signaux ZigBee modulés au démodulateur 21 du modem ZigBee 7.

Le démodulateur 21 récupère les signaux numériques à partir du signal ZigBee modulé. On notera que le démodulateur 21 peut utiliser des moyens de correction d'erreurs permettant d'éliminer le bruit inhérent au signal analogique transmis sur le câble.

Une fois les signaux numériques récupérés, ces derniers sont modulés par le modulateur 5 fonctionnant selon le deuxième modulation/démodulation suivant un protocole asynchrone à accès aléatoire multiple à étalement de bande par modulation du type SPREAD ALOHA sur la bande de fréquences S [1980 MHz - 2010 MHz]. Le fait d'avoir récupérer des informations numériques très « propres » entraîne que ce signal modulé est peu bruité et nécessite une faible amplification. On notera qu'on peut toutefois envisager d'utiliser un amplificateur de faible puissance pour amplifier les signaux modulés destinés à être transmis en bande S vers le satellite 100 ou le collecteur 101 via l'antenne 23.

On notera que la bande de fréquences intermédiaires (868 MHz par exemple) choisie présente l'avantage d'être compatible avec la bande passante d'un câble coaxial standard et permet de limiter les pertes sur le câble coaxial sans avoir besoin de faire de transposition en fréquence au niveau de l'unité d'émission/réception. Par ailleurs, le fait d'avoir une bande UHF disjointe de la fréquence 868 MHz permet d'éviter les interférences entre les signaux transmis sur le même câble. On notera que l'utilisation d'une autre fréquence intermédiaire par le modulateur du modem ZigBee 14, par exemple 430 MHz, se trouvant dans la bande UHF, pourrait nécessiter d'effectuer une transposition de fréquence au niveau du boîtier 11 de façon à éviter les interférences sur le câble 10 (par exemple en utilisant un oscillateur local et un mélangeur de fréquence).

On notera également que les différents coupleurs/découpleurs peuvent être munis de filtre de manière à ne récupérer que la partie utile en fréquence.

La voie aller de réception terrestre en UHF permet par ailleurs de récupérer des informations utiles. Il peut s'agir par exemple de la fréquence ou de la largeur de bande qui seront utilisées en voie retour en bande S. Il peut s'agir également de mises à jour liées à la modulation/démodulation utilisée par le modulateur 5. En d'autres termes, la voie aller de diffusion terrestre peut être fortement intégrée à la voie retour satellitaire puisque les signaux multiplex émis par voie terrestre peuvent contenir des informations de signalisation utiles pour le bon fonctionnement de l'installation. Ces informations peuvent inclure des paramètres d'émission à utiliser (fréquence, débit de type « symbol rate », code d'étalement), la charge du système, des clés de sécurité, ainsi que d'autres instructions pour l'installation.

Pour ce faire, l'unité d'émission/réception 2 contient donc la logique nécessaire pour interpréter l'information présente dans la voie de diffusion terrestre et l'utiliser pour piloter l'émission de signaux. Ce dernier point suppose que l'unité d'émission/réception comporte un démodulateur 6 fonctionnant selon la norme DVB-T pour extraire des informations de signalisation utilisées pour établir les paramètres d'émission en voie retour présentes dans une partie des signaux électriques terrestres, ces informations étant transmises au modulateur 5. Le démodulateur 6 peut aussi envoyer au modulateur 5 (directement ou à travers des moyens de traitement de signal non représentés) un signal d'horloge (« clock ») très stable (par exemple avec une erreur en fréquence inférieure à 1 ppm), utilisé pour émettre à la fréquence requise avec une erreur en fréquence très faible (par exemple inférieur à 2 kHz).

On notera que l'unité d'émission/réception extérieure 2 comporte une alimentation 29 ; cette alimentation DC peut directement être transmise en voie montante via le câble coaxial 10 (via des moyens d'extraction de l'unité 2 non représentés). Il est également possible de recharger la batterie de l'alimentation 29 via un ou des panneaux solaires 30.

La consommation énergétique de l'unité d'émission/réception 2 peut être limitée en alimentant le modulateur 5 (intégrant le cas échéant l'amplificateur de signaux à transmettre) uniquement lorsqu'un signal est à émettre. Pour ce faire, l'unité d'émission/réception 2 comporte des moyens pour alimenter le modem 5 uniquement après avoir reçu par le démodulateur 7 un signal à émettre. Pour toutes les applications où le taux d'utilisation (« duty cycle » en anglais) est réduit (par exemple un message tous les minutes) une telle mise en oeuvre permet de ne pas consommer d'énergie pendant les périodes sans émission de messages.

Une seconde application particulièrement intéressante de l'installation selon l'invention concerne le domaine du M2M. Dans ce cas, la voie retour en bande S peut être utilisée pour transmettre des informations provenant d'un appareil se trouvant dans la maison tel qu'un système d'alarme ; ainsi, lorsque le système d'alarme se déclenche, un signal est transmis par le système d'alarme aux moyens de connexion sans fil 16 (par exemple des moyens fonctionnant en ZigBee) et un message indiquant la mise en route de l'alarme est transmis sur la voie retour en bande S.

Selon une variante de l'invention, il est également possible d'utiliser une voie aller de diffusion satellitaire comme décrit dans la demande de brevet WO2011076791 déposée par la demanderesse à la place d'une voie aller terrestre. Dans ce cas, l'antenne râteau 3 et les moyens d'entrée 4 aptes à recevoir les signaux électriques terrestres reçues par l'antenne 3 sont remplacés par un réflecteur parabolique et un bloc de réception LNB (« Low Noise Block ») pour la réception des signaux issus d'un satellite (par exemple en bande Ku (bande 10,7 GHz - 12,75 GHz). Le LNB de l'unité d'émission/réception transforme les signaux hyperfréquences reçus en signaux électriques en bande satellite intermédiaire afin de les transmettre, par l'intermédiaire du câble coaxial au boîtier.

Dans ce cas, le démodulateur 6 fonctionnant selon la norme DVB-T devient un démodulateur fonctionnant par exemple selon la norme DVB-S2 (ETSI EN 302 307 Digital Video Broadcasting (DVB) ; Second generation framing structure, channel coding and modulation systems for Broadcasting, Interactive Services, News Gathering and other broadband satellite applications (DVB-S2)). Selon ce dernier mode de réalisation, on utilisera avantageusement le gain du réflecteur utilisé pour recevoir les signaux hyperfréquences dans la bande Ku pour transmettre les signaux en voie retour dans la bande S.

Selon une autre variante de l'invention, plutôt que d'utiliser des modems 7 et 14 fonctionnant selon un protocole adapté aux communications sans fil de courte portée (par exemple ZigBee ou KNX), on peut utiliser une technologie filaire comme Ethernet ou à courant porteur en ligne ou CPL. Dans ce cas, les modems 7 et 14 sont remplacés par des modems CPL et chaque boîtier communique avec d'autres dispositifs à l'intérieur de la maison par le réseau électrique. Les signaux CPL reçus par le boîtier 11 sont modulés par le modulateur du modem CPL à une fréquence par exemple comprise entre 1 et 20 MHz et transmis sur le câble coaxial.

On notera également que l'unité d'émission/réception peut être équipée de moyens de connexion sans fil ou de transmission CPL afin de communiquer avec d'autres dispositifs, notamment lorsque la transmission sur le câble coaxial n'est pas opérationnelle.

L'antenne râteau ou le réflecteur parabolique sont de préférence une antenne ou un réflecteur collectif utilisée sur le toit d'un immeuble collectif et partagé par plusieurs utilisateurs équipés chacun d'un boîtier.

Bien entendu, l'invention n'est pas limitée au mode de réalisation qui vient d'être décrit.

Ainsi, l'invention a été plus particulièrement décrite dans le cas d'une utilisation en bande S mais elle peut également être utilisée en bande C.

## Revendications

1. Installation d'émission/réception (1) de signaux radioélectriques hyperfréquences comportant :
- une unité d'émission/réception (2) comportant des moyens (4) aptes à recevoir des signaux électriques issus de la transformation de signaux radioélectriques reçus par voie hertzienne terrestre ou par voie satellitaire, dits signaux électriques en voie aller ;
- au moins un boîtier (11) incluant un modulateur (14) ;
- un câble coaxial (10) reliant l'unité d'émission/réception et le boîtier apte à véhiculer lesdits signaux électriques en voie aller de ladite unité d'émission/réception (2) vers ledit boîtier (11) ;
l'installation d'émission/réception étant **caractérisée en ce que** :
- l'unité d'émission/réception (2) comporte :
o un démodulateur (21) apte à démoduler des signaux électriques selon un premier protocole de modulation/démodulation ;
o un modulateur (5) de signaux électriques selon un second protocole de modulation/démodulation différent dudit premier protocole, ledit second protocole étant un protocole à étalement de spectre, ledit modulateur (5) modulant les signaux démodulés par ledit démodulateur (21) ;
o des moyens (23) pour transformer lesdits signaux électriques modulés selon ledit protocole à étalement de spectre, dits signaux électriques en voie retour, en signaux radioélectriques aptes à être émis par voie satellitaire ;
- le modulateur (14) du boitier (11) est apte à moduler des signaux électriques selon ledit premier protocole de modulation/démodulation, lesdits signaux électriques étant destinés à être démodulés par le démodulateur (21) selon ledit premier protocole puis modulés par le modulateur (5) selon ledit second protocole de modulation/démodulation ;
- le câble coaxial est apte à véhiculer les signaux électriques issus dudit modulateur (14) selon ledit premier protocole dudit boîtier (11) vers ladite unité d'émission/réception (2).

2. Installation d'émission/réception selon la revendication précédente **caractérisée en ce que** ledit modulateur de signaux électriques selon un second protocole de modulation/démodulation comporte des moyens de mise en oeuvre d'un protocole à étalement de spectre fonctionnant selon un protocole asynchrone à accès aléatoire multiple à étalement de spectre.

3. Installation d'émission/réception selon l'une des revendications précédentes **caractérisée en ce que** ledit premier protocole de modulation/démodulation est basé sur un protocole adapté à la communication sans fil de courte distance tel que l'un des protocoles suivants : ZigBee, KNX, WiFi, BlueTooth ou WiMax.

4. Installation d'émission/réception selon l'une des revendications 1 ou 2 **caractérisée en ce que** ledit premier protocole de modulation/démodulation est basé sur un protocole adapté à une technologie filaire telle que Ethernet ou à courant porteur en ligne CPL.

5. Installation d'émission/réception selon l'une des revendications précédentes **caractérisée en ce que** ladite unité d'émission/réception comporte des moyens pour extraire, à partir des signaux électriques en voie aller, des informations de signalisation pour l'établissement des paramètres d'émission et/ou un signal d'horloge.

6. Installation d'émission/réception selon l'une des revendications précédentes **caractérisée en ce que** ladite unité d'émission/réception comporte un démodulateur desdits signaux électriques en voie aller tel qu'un démodulateur apte à démoduler des signaux selon l'une des normes suivantes :
- DVB-T ;
- DVB-T2 ;
- DVB-S ;
- DVB-S2 ;
- DVB-SH.

7. Installation d'émission/réception selon l'une des revendications précédentes **caractérisée en ce que** ladite unité d'émission/réception et/ou ledit boîtier comportent des moyens de connexion sans fil tels que des moyens WiFi, WiMax, BlueTooth, ZigBee ou KNX.

8. Installation d'émission/réception selon l'une des revendications précédentes **caractérisée en ce que** lesdits signaux électriques en voie retour sont modulés dans la bande de fréquences d'émission dite bande S et plus particulièrement dans la bande [1980 MHz ; 2010 MHz] ou dans la bande de fréquences d'émission dite bande C.

9. Installation d'émission/réception selon l'une des revendications précédentes **caractérisée en ce que** lesdits moyens aptes à recevoir des signaux électriques issus de la transformation de signaux radioélectriques sont aptes à recevoir des signaux radioélectriques hyperfréquences terrestres dans la bande UHF ou VHF.

10. Installation d'émission/réception selon l'une des revendications 1 à 8 **caractérisée en ce que** lesdits moyens aptes à recevoir des signaux électriques issus de la transformation de signaux radioélectriques sont aptes à recevoir des signaux radioélectriques hyperfréquences satellitaires dans la bande Ku ou la bande Ka.

11. Installation d'émission/réception selon l'une des revendications précédentes **caractérisée en ce que** ladite unité d'émission/réception comporte des moyens d'émission vers un satellite et/ou vers une station de réception terrestre desdits signaux radioélectriques aptes à être émis par voie satellitaire.

12. Unité d'émission/réception apte à être intégrée dans une installation selon l'une des revendications 1 à 11 comportant :
- des moyens (4) aptes à recevoir des signaux électriques issus de la transformation de signaux radioélectriques reçus par voie hertzienne terrestre ou par voie satellitaire, dits signaux électriques en voie aller ;
- un démodulateur (21) apte à démoduler des signaux électriques selon un premier protocole de modulation/démodulation ;
- un modulateur (5) de signaux électriques selon un second protocole de modulation/démodulation différent dudit premier protocole, ledit second protocole étant un protocole à étalement de spectre, ledit modulateur (5) modulant les signaux démodulés par ledit démodulateur (21) ;
- des moyens (23) pour transformer lesdits signaux électriques modulés selon ledit protocole à étalement de spectre, dits signaux électriques en voie retour, en signaux radioélectriques aptes à être émis par voie satellitaire.

## Patentansprüche

1. Sender-Empfängeranlage (1) von funkelektrischen Hyperfrequenzsignalen, umfassend:
- eine Sender-Empfängereinheit (2), umfassend Mittel (4), die geeignet sind, elektrische Signale zu empfangen, die aus der Umwandlung von funkelektrischen Signalen stammen, die per drahtloser terrestrischer Verbreitung oder per Satellitenverbreitung, bezeichnet als elektrische Signale auf dem Hinweg, empfangen werden;
- wenigstens ein Gehäuse (11), das einen Modulator (14) einschließt;
- ein koaxiales Kabel (10), das die Sender-Empfängereinheit und das Gehäuse verbindet, das zum Übertragen der genannten elektrischen Signale auf dem Hinweg der genannten Sender-Empfängereinheit (2) zu dem genannten Gehäuse (11) geeignet ist;
- wobei die Sender-Empfängeranlage **dadurch gekennzeichnet ist, dass**:
- die Sender-Empfängereinheit (2) umfasst:
o einen Demodulator (21), der geeignet ist, elektrische Signale gemäß einem ersten Modulations- / Demodulationsprotokoll zu demodulieren;
o einen Modulator (5) von elektrischen Signalen gemäß einem von dem genannten ersten Protokoll unterschiedlichen zweiten Modulations- / Demodulationsprotokoll, wobei das genannte zweite Protokoll ein Spreizspektrumprotokoll ist, wobei der genannte Modulator (5) die von dem genannten Demodulator (21) modulierten Signale moduliert;
o Mittel (23) zum Umwandeln der genannten elektrischen modulierten Signale gemäß dem genannten Spreizspektrumprotokoll, bezeichnet als elektrische Signale auf dem Rückweg, in funkelektrische Signale, die geeignet sind, auf dem Satellitenweg gesendet zu werden;
- der Modulator (14) des Gehäuses (11) ist geeignet, elektrische Signale gemäß dem genannten ersten Modulations- / Demodulationsprotokoll zu modulieren, wobei die genannten elektrischen Signale dazu bestimmt sind, von dem Demodulator (21) gemäß dem genannten ersten Protokoll demoduliert, dann von dem Modulator (5) gemäß dem genannten zweiten Modulations-/ Demodulationsprotokoll moduliert zu werden;
- das koaxiale Kabel ist in der Lage, die aus dem genannten Modulator (14) stammenden elektrischen Signale gemäß dem ersten Protokoll des genannten Gehäuses (11) auf die genannte Sender-Empfängereinheit (2) zu übertragen.

2. Sender-Empfängeranlage gemäß dem voranstehenden Anspruch, **dadurch gekennzeichnet, dass** der genannte Modulator von elektrischen Signalen gemäß einem zweiten Modulations- / Demodulationsprotokoll Umsetzungsmittel eines Spreizspektrumprotokolls umfasst, das gemäß einem asynchronen Protokoll mit multiplem zufälligem Zugang mit Spreizspektrum funktioniert.

3. Sender-Empfängeranlage gemäß einem der voranstehenden Ansprüche, **dadurch gekennzeichnet, dass** das genannte erste Modulations- / Demodulationsprotokoll auf einem für die drahtlose Kommunikation über eine kurze Entfernung geeigneten Protokoll basiert, wie z. B. einem der folgenden Protokolle: ZigBee, KNW, W-Lan, BlueTooth oder WiMax

4. Sender-Empfängeranlage gemäß einem der Ansprüche 1 oder 2, **dadurch gekennzeichnet, dass** das genannte erste Modulations- / Demodulationsprotokoll auf einem Protokoll basiert, das für eine Drahttechnologie, wie z. B. Ethernet oder mit Trägerstrom in einer Leitung CPL geeignet ist.

5. Sender-Empfängeranlage gemäß einem der voranstehenden Ansprüche, **dadurch gekennzeichnet, dass** die genannte Sender-Empfängereinheit Mittel zum Extrahieren der Signalisationsinformationen für die Herstellung von Senderparametern und / oder einem Uhrensignal ausgehend von elektrischen Signalen auf dem Hinweg umfasst.

6. Sender-Empfängeranlagen gemäß einem der voranstehenden Ansprüche, **dadurch gekennzeichnet, dass** die genannte Sender-Empfängereinheit einen Demodulator der genannten elektrischen Signale auf dem Hinweg, wie z. B. einen Demodulator umfasst, der geeignet ist, Signale gemäß einer der folgenden Normen zu demodulieren:
- DVB-T;
- DVB-T2;
- DVB-S;
- DVB-S2;
- DVB-SH.

7. Sender-Empfängeranlagen gemäß einem der voranstehenden Ansprüche, **dadurch gekennzeichnet, dass** die genannte Sender-Empfängereinheit und / oder das genannte Gehäuse drahtlose Anschlussmittel umfassen, wie z. B. W-Lan-, WiMax-, BlueTooth-, ZigBee- oder KNX-Mittel.

8. Sender-Empfängermittel gemäß einem der voranstehenden Ansprüche, **dadurch gekennzeichnet, dass** die genannten elektrischen Signale auf dem Rückweg in dem Senderfrequenzband, bezeichnet als Band S, und insbesondere in dem Band [1980 MHz; 2010 MHz] oder in dem Senderfrequenzband, bezeichnet als Band C, moduliert sind.

9. Sender-Empfängeranlage gemäß einem der voranstehenden Ansprüche, **dadurch gekennzeichnet, dass** die genannten Mittel, die zum Empfang der aus der Umwandlung von funkelektrischen Signalen stammenden elektrischen Signale geeignet sind, zum Empfang der funkelektrischen terrestrischen Hyperfrequenzsignale in dem Band UHF oder VHF geeignet sind.

10. Sender-Empfängeranlage gemäß einem der Ansprüche 1 bis 8, **dadurch gekennzeichnet, dass** die genannten Mittel, die zum Empfang der aus der Umwandlung von funkelektrischen Signalen stammenden Signale geeignet sind, zum Empfang der funkelektrischen Hyperfrequenz-Satellitensignale in dem Band Ku oder dem Band Ka geeignet sind.

11. Sender-Empfängeranlage gemäß einem der voranstehenden Ansprüche, **dadurch gekennzeichnet, dass** die genannte Sender-Empfängereinheit Sendermittel zu einem Satelliten und / oder zu einer terrestrischen Empfängerstation der genannten funkelektrischen Signale umfasst, die geeignet sind, per Satellitenverbreitung gesendet zu werden.

12. Sender-Empfängereinheit, die geeignet ist, in eine Anlage gemäß einem der Ansprüche 1 bis 11 eingebaut zu werden, umfassend:
- Mittel (4), die geeignet sind, elektrische Signale zu empfangen, die aus der Umwandlung von funkelektrischen Signalen stammen, welche per drahtloser terrestrischer Verbreitung oder per Satellitenverbreitung, bezeichnet als elektrische Signale auf dem Hinweg, empfangen werden;
- einen Demodulator (21), der geeignet ist, elektrische Signale gemäß einem ersten Modulations- / Demodulationsprotokoll zu demodulieren;
- einen Modulator (5) von elektrischen Signalen gemäß einem von dem genannten ersten Protokoll unterschiedlichen zweiten Modulations- / Demodulationsprotokoll, wobei das genannte zweite Protokoll ein Spreizspektrumprotokoll ist, wobei der genannte Modulator (5) die von dem genannten Demodulator (21) demodulierten Signale moduliert;
- Mittel (23) zum Umwandeln der genannten, gemäß dem genannten Spreizspektrumprotokoll modulierten elektrischen Signale, bezeichnet als elektrische Signale auf dem Rückweg, in funkelektrische Signale, die geeignet sind, um per Satellitenverbreitung gesendet zu werden.

## Claims

1. Transmission/reception installation (1) for microwave radio signals comprising:
- a transmission/reception unit (2) comprising means (4) for receiving the electric signals from the conversion of radioelectric signals received via a terrestrial or satellite channel, referred to as forward-link signals;
- at least one box (11) including a modulator (14);
- a coaxial cable (10) connecting the transmission/reception unit and the box capable of conveying said forward-link signals from said transmission/reception unit (2) to said box (11); the transmission/reception installation being **characterised in that**:
- the transmission/reception unit (2) comprises:
o a demodulator (21) able to demodulate electric signals according to a first modulation/demodulation protocol;
o a modulator (5) of electric signals according to a second modulation/demodulation protocol that is different from said first protocol, said second protocol being a spread spectrum protocol, said modulator (5) modulating the signals demodulated by said demodulator (21);
o means (23) for converting said electric signals modulated according to said spread spectrum protocol, referred to as return-channel signals, into radioelectric signals capable of being transmitted via a satellite channel;
- the modulator (14) of the box (11) is capable of modulating electric signals according to said first modulation/demodulation protocol, said electric signals being intended to be demodulated by the demodulator (21) according to said first protocol then modulated by the modulator (5) according to said second modulation/demodulation protocol;
- the coaxial cable is capable of conveying the electric signals from said modulator (14) according to said first protocol from said box (11) to said transmission/reception unit (2).

2. Transmission/reception installation as claimed in the preceding claim **characterised in that** said modulator of electric signals according to a second modulation/demodulation protocol comprises means for implementing a spread spectrum protocol operating according to a spread spectrum multiple random access asynchronous protocol.

3. Transmission/reception installation according to one of the preceding claims **characterised in that** said first modulation/demodulation protocol is based on a protocol suited for short distance wireless communication such as one of the following protocols: ZigBee, KNX, WiFi, BlueTooth or WiMax.

4. Transmission/reception installation according to one of claims 1 or 2 **characterised in that** said first modulation/demodulation protocol is based on a protocol suited for a wired technology such as Ethernet or power line communication PLC.

5. Transmission/reception installation according to one of the preceding claims **characterised in that** said transmission/reception unit comprises means for extracting, from forward-link electric signals, signalling information for the establishing transmitting parameters and/or a clock signal.

6. Transmission/reception installation according to one of the preceding claims **characterised in that** said transmission/reception unit comprises a demodulator of said forward-link signals such as a demodulator capable of demodulating signals according to one of the following standards:
- DVB-T;
- DVB-T2;
- DVB-S;
- DVB-S2;
- DVB-SH.

7. Transmission/reception installation according to one of the preceding claims **characterised in that** said transmission/reception unit and/or said box comprise means of wireless connection such as WiFi, WiMax, BlueTooth, ZigBee or KNX means.

8. Transmission/reception installation according to one of the preceding claims **characterised in that** said return-channel electric signals are modulated in the transmitting frequency band referred to as band S and more particularly in the band [1980 MHz; 2010 MHz] or in the transmitting frequency band referred to as band C.

9. Transmission/reception installation according to one of the preceding claims **characterised in that** said means capable of receiving electric signals from the conversion of radioelectric signals are capable of receiving terrestrial microwave radioelectric signals in the UHF or VHF band.

10. Transmission/reception installation according to one of claims 1 to 8 **characterised in that** said means capable of receiving electric signals from the conversion of radioelectric signals are capable of receiving satellite microwave radioelectric signals in the Ku band or the Ka band.

11. Transmission/reception installation according to one of the preceding claims **characterised in that** said transmission/reception unit comprises means for transmitting to a satellite and/or to a terrestrial receiving station said radioelectric signals capable of being transmitted by satellite channel.

12. Transmission/reception unit capable of being integrated into an installation according to one of claims 1 to 11 comprising:
- means (4) for receiving the electric signals from the conversion of radioelectric signals received via a terrestrial or satellite channel, referred to as forward-link signals;
- a demodulator (21) capable of demodulating electric signals according to a first modulation/demodulation protocol;
- a modulator (5) of electric signals according to a second modulation/demodulation protocol that is different from said first protocol, said second protocol being a spread spectrum protocol, said modulator (5) modulating the signals demodulated by said demodulator (21);
- means (23) for transferring said electric signals modulated according to a spread spectrum protocol, referred to as return-channel signals, into radioelectric signals capable of being transmitted via a satellite channel.
